# EUROPEAN PATENT SPECIFICATION

(11) **EP 1 707 421 B1**
(45) Date of publication and mention of the grant of the patent: **28.11.2007**
(21) Application number: 06111739.6
(22) Date of filing: 27.03.2006
(51) Int. Cl.: B60K 11/04, F28F 9/00, B62D 25/08

(54) **Radiator core support structure and its assemlbly method**
Tragstruktur für Kraftfahrzeugkühlerblock und entsprechendes Montageverfahren
Structure de support pour bloc de radiateur d'un véhicule et son procédé d'assemblage

(30) Priority: 28.03.2005 JP 2005092572
(43) Date of publication of application: 04.10.2006
(73) Proprietor: Calsonic Kansei Corporation, Tokyo 164-8602 (JP)
(72) Inventor: Kobayashi, Hideki, Tokyo 164-8602 (JP); Mashio, Katsuji, Tokyo 164-8602 (JP); Hara, Kenji, Tokyo 164-8602 (JP); Tsumura, Koji, Tokyo 164-8602 (JP); Mori, Eiichi, Tokyo 164-8602 (JP); Okamoto, Kosuke, Tokyo 164-8602 (JP)
(74) Representative: Intes, Didier Gérard André

(56) References cited:
- EP-A- 1 498 296
- DE-A1- 10 051 567
- DE-A1- 10 347 136
- DE-A1-1102004 024 15
- FR-A- 2 822 760

## Description

The present invention relates to a radiator core support structure, and in particular to the radiator core support structure in which a radiator core support supports a heat exchanger whose pipes are introduced through through-holes formed on the radiator core support. This invention also relates to a radiator core support structure assembly method in which the radiator and the radiator core support are assembled with each other.

In recent years, various reviews for downsizing an engine room of a motor vehicle have been made for the purpose of obtaining a larger space of a passenger compartment. The reviews have been carried out on components in the engine room, such as an engine, auxiliary machines, and a radiator core support which acts as a carrier of a heat exchanger, and also on a layout of them. One attempt solution is to improve a radiator core support structure so that the heat exchanger is arranged at a front side of the radiator core support. This heat-exchanger displacement enables the engine and auxiliary machines to be arranged in a further front area of the engine room, enlarging the passenger compartment by their displacement spaces.

The above-constructed support structure provides an advantage in arranging the engine, the auxiliary machines and/or others in the vicinity of the radiator core support, but this conventional support structure requires the heat exchanger arranged at the front side of the core support and the engine arranged at the rear side of the core support to be fluidically connected with each other due to its layout restriction and the like. Accordingly, pipes of the heat exchanger needs to be introduced through the radiator core support.

Specifically, the heat exchanger to be used for such a radiator core support structure needs to be provided with an upper pipe and a lower pipe, one of which is an inlet pipe and the other is an outlet pipe, which extend perpendicularly to a core surface of the heat structure. Such a heat exchanger is described in Japanese Patent Application Laid-open No. 2000- 18874. The radiator core support described therein is formed with two openings, one of the openings being arranged on a top portion of a header pipe and the other thereof being arranged on a bottom portion of the other header pipe. These openings are connected with pipes extending perpendicularly to a core surface of the heat exchanger through connecting block bodies, respectively.

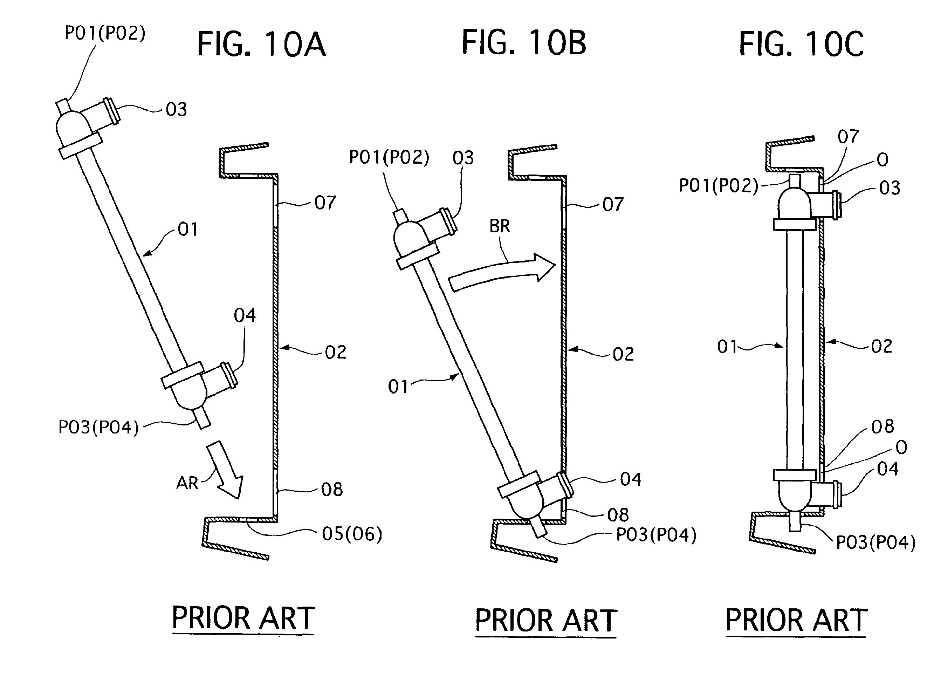

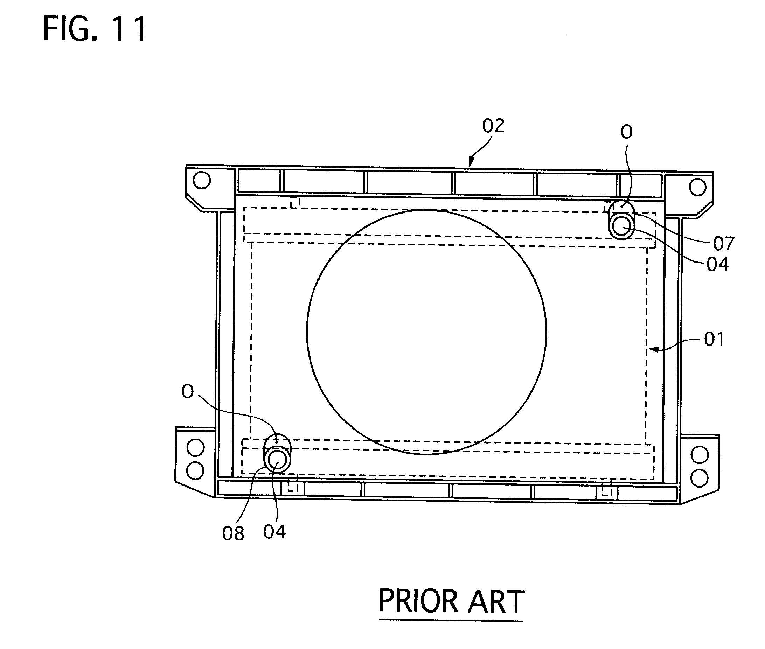

Such a conventional heat exchanger with an upper pipe and a lower pipe, without connecting blocks, both pipe extending perpendicularly to a rear surface of a heat exchanger, is also shown in FIG. 11,and is assembled with a radiator core support as follows. FIG.10A to 10C illustrate how a heat exchanger 01 is mounted on a radiator core support 02.

The heat exchanger 01 has an upper pipe 03 and a lower pipe 04. The upper and lower pipes 03 and 04 project rearward from a top portion and a bottom portion of the heat exchanger 01, respectively, and are arranged at both side portions of the heat exchanger 01 apart from each other in its width direction. The heat exchanger 01 is also provided with two lower mounting pins P03 and P04 projecting downwardly from the bottom portion.

The radiator core support 02 is formed on a horizontal wall of its bottom portion with two fixing holes 05 and 06 corresponding to the lower mounting pins P03 and P04, respectively. The radiator core support 02 is also formed on its shroud portion, as a vertical wall, with an upper through-hole 07 and a lower through-hole 08 corresponding to the upper pipe 03 and the lower pipe 04, respectively. These through-holes 07 and 08 are arranged apart from each other in the width direction, but they are illustrated on the same plane for easy understanding.

In order to mount the heat exchanger 01 on the radiator core support 02, the lower mounting pins P03 and P04 are injected in an inclined direction indicated by an arrow AR in FIG. 10A into two fixing holes 05 and 06 by tilting the heat exchanger 01 diagonally forward relative to the radiator core support 02. Consequently, the lower mounting pins P03 and P04 are supported by a lower portion of the radiator core support 2 through a not-shown elastic member.

Next, the heat exchanger 01 is turned rearward as indicated by an arrow BR in FIG. 10B around the center of the fixing holes 05 and 06 to thereby stand erect as shown in FIG. 10C. This turning movement of the heat exchanger 01 brings the pipes 03 and 04 to be introduced through the upper and lower through-holes 07 and 08.

Then, two upper mounting pins P01 and P02 of the heat exchanger 01 are fixed to an upper portion of the radiator core support 02 through an elastic member and a mounting bracket, which are not shown.

In the turning movement, it has need to avoid the interference between the pipes 03 and 04 and the radiator core support 02 while tilting the heat exchanger 01 rearward to stand erect. Therefore, the through-holes 07 and 08 are ordinarily formed as an elongate hole extending in a vertical direction. In another case, only the lower through-hole 08, which is disposed nearer to the rotating center of the heat exchanger 01, is formed as the elongate hole.

However, the conventional radiator core support structure has disadvantages in that large gaps O are unavoidable between the pipes 03 and 04 and the radiator core support 02 respectively, as shown in FIGS. 10C and 11 when the heat exchanger 01 and the core support 02 are assembled with each other, since they are elongate holes.

These large gaps O cause a hot air, passing through the heat exchanger 01 and then heated by the engine, to blow back toward the heat exchanger 01, thereby deteriorating coolability of the heat exchanger 01. In addition, these large through-holes 07 and 08 reduce stiffness of through-hole peripheral portions of the radiator core support 02.

It is, therefore, an object of the present invention to provide a radiator core support structure in which a through-hole on a radiator core support can be formed smaller in area than that of the above-described conventional support structure without an interference between the radiator core support and a pipe of a heat exchanger while assembling them, thereby decreasing a hot-air back-flow from an engine to the heat exchanger and suppressing stiffness reduction of a through-hole peripheral portion of the radiator core support.

It is, therefore, another object of the present invention to provide a radiator core support structure assembly method in which a through-hole on a radiator core support can be formed smaller in area than that of the above-described conventional support structure without an interference between the radiator core support and a pipe of a heat exchanger while assembling them, thereby decreasing a hot-air back-flow from an engine to the heat exchanger and suppressing stiffness reduction of a through-hole peripheral portion of the radiator core support.

According to a first aspect of the present invention there is provided a radiator core support structure comprising a radiator core support to be fixed to a vehicle body, the radiator core support having an obstructing portion formed with through-holes communicating a front side and a rear side thereof and a lower portion formed with fixing holes on an upper surface of the lower portion; and a heat exchanger provided with pipes projecting rearward from the heat exchanger to be introduced through the through-holes of the radiator core support when the heat exchanger is attached to the radiator core support, the heat exchanger having a bottom portion with lower mounting pins projecting downward from the bottom portion to be inserted in the fixing holes when the heat exchanger is attached to the radiator core support. At least one of the fixing holes is formed as an elongate hole extending toward the front side so that the pipe can be kept free from an interference between the pipes and the radiator core support when the lower mounting pins are inserted diagonally from a front side of the radiator core support into a front side of the fixing holes and the heat exchanger is turned rearward around the front side of the fixing holes to stand erect, wherein at least one of the fixing hole allowing the lower mounting pins to be slid rearward for introducing the pipes through the through-holes.

In this radiator core support structure, the through-hole formed on the radiator core support can be formed smaller in area than that of the above-described conventional support structure without the interference between the radiator core support and the pipe of the heat exchanger while assembling the support structure. This decreases a hot-air back-flow from an engine to the heat exchanger and suppresses stiffness reduction of the through-hole peripheral portion of the radiator core support. Incidentally, the obstructing portion may be a shroud portion.

Preferably, the lower mounting pin comprising a lower left mounting pin and a lower right mounting pin which are apart from each other in a lateral direction of the vehicle body when the heat exchanger is attached to the radiator core support. The fixing hole comprises a left fixing hole and a right fixing hole for receiving the lower left mounting pin and the lower right fixing pin, respectively.

Therefore, the heat exchanger can be easily handled in its assembly due to its two freely movable supporting positions.

Preferably, the lower portion of the radiator core support has a slide-preventing hole. The lower mounting pin comprises a lower left mounting pin and a lower right mounting pin which are apart from each other in a lateral direction of the vehicle body, one of the lower left and right mounting pins being inserted in the fixing hole and the other of the lower left and right mounting pins being inserted in the slide-preventing hole when the heat exchanger is attached to the radiator core support.

Therefore, the heat exchanger can be stably handled due to firm support at the slide-protecting hole, and the radiator core support has higher stiffness of a portion around the slide-protecting hole.

Preferably, the heat exchanger has an upper left mounting pin and an upper right mounting pin on a top portion of the heat exchanger, the upper left and right mounting pins being apart from each other in a lateral direction of the heat exchanger and supported by an upper potion of the radiator core support so that the heat exchanger is fixed by three-point support of the upper left and right mounting pins and the one of the lower left and right mounting pins inserted in the slide-preventing hole.

Therefore, a holder for covering a gap formed in a front portion of the fixing hole can be removed because of three-point support, decreasing manufacturing process and cost.

Preferably, the pipe comprises a first pipe and a second pipe disposed under the first pipe, and the slide-preventing hole receives the lower mounting pin arranged at a side of the first pipe, and the fixing hole receives the lower mounting pin arranged at a side of the second pipe.

Therefore, it can easily avoid an interference between the second pipe and the radiator core, which becomes more problematic than an interference between the first pipe and the radiator core support.

Preferably, the radiator core support structure further comprises an elastic member insertable in and slidable along the fixing hole and formed to receive the lower mounting pin.

Therefore, the heat exchanger can be stably supported in its assembly and elastically mountable on the radiator core support for decreasing impact caused from vehicle running.

Preferably, the obstructing portion is a shroud portion.

Therefore, the through-holes can be easily formed to pass the pipes at their desirable positions without decreasing rigidity of the radiator core support.

Preferably, the heat exchanger is at least one of a radiator and a condenser.

Therefore, this radiator core support structure can be applied to at least one of the radiator and the condenser, and provide the similar advantages described above.

According to a second aspect of the present invention there is provided a radiator core support structure assembly method comprising preparing a radiator core support to be fixed to a vehicle body, the radiator core support having an obstructing portion formed with a through-hole communicating a front side and a rear side thereof and a lower portion formed with a fixing hole on an upper surface of the lower portion; preparing a heat exchanger provided with a pipe projecting rearward from the heat exchanger to be introduced through the through-hole of the radiator core support when the heat exchanger is attached to the radiator core support, the heat exchanger having a bottom portion with a lower mounting pin projecting downward from the bottom portion to be inserted in the fixing hole when the heat exchanger is attached to the radiator core support; inserting the lower mounting pin diagonally from a front side of the radiator core support into a front side of the fixing hole; turning the heat exchanger rearward around the front side of the fixing hole to stand erect, where the pipe is kept free from an interference between the pipe and the radiator core support while turning the heat exchanger; and moving the heat exchanger rearward in a substantially horizontal direction so that the lower mounting pin can slide along the fixing hole and the pipe can be introduced through the through-hole.

Therefore, this method can provide a radiator core support structure in which the through-hole formed on the radiator core support can be formed smaller in area than that of the above-described conventional support structure without the interference between the radiator core support and the pipe of the heat exchanger while assembling the support structure. This decreases a hot-air back-flow from an engine to the heat exchanger and suppresses stiffness reduction of a through-hole peripheral portion of the radiator core support.

The objects, features and advantages of the present invention will become apparent as the description proceeds when taken in conjunction with the accompanying drawings, in which:
FIG. 1 is an overall perspective view of a radiator core support structure, in a state where a heat exchanger and a radiator core support are assembled with each other, of a first embodiment according to the present invention;
FIG. 2 is an exploded perspective view of the radiator core support structure of the first embodiment;
FIG. 3 is a rear view of the radiator core support structure, shown in FIGS. 1 and 2, in a state where the heat exchanger and the radiator core support are assembled with each other;
FIG. 4 is an enlarged perspective partial view of a bottom portion of the heat exchanger and a lower portion of the radiator core support, which are shown in FIGS. 1 to 3, before the heat exchanger is mounted on the radiator core support;

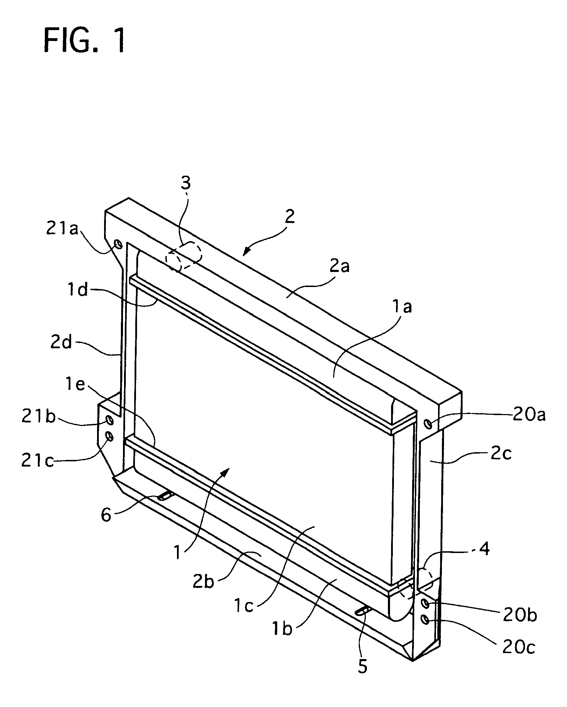

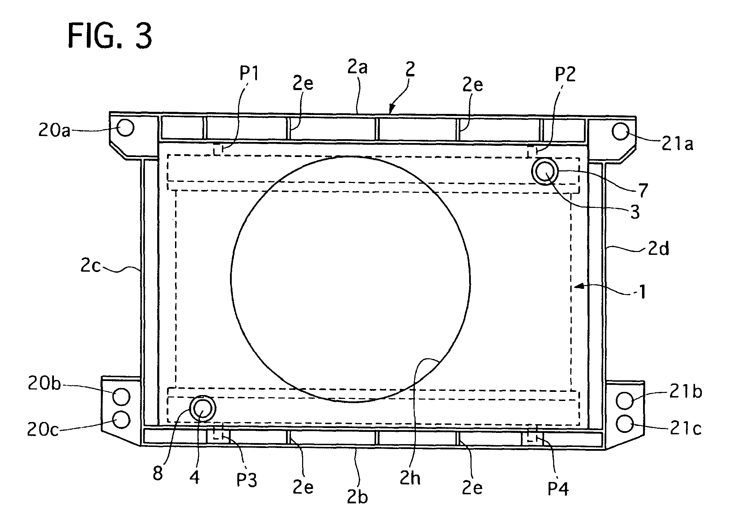

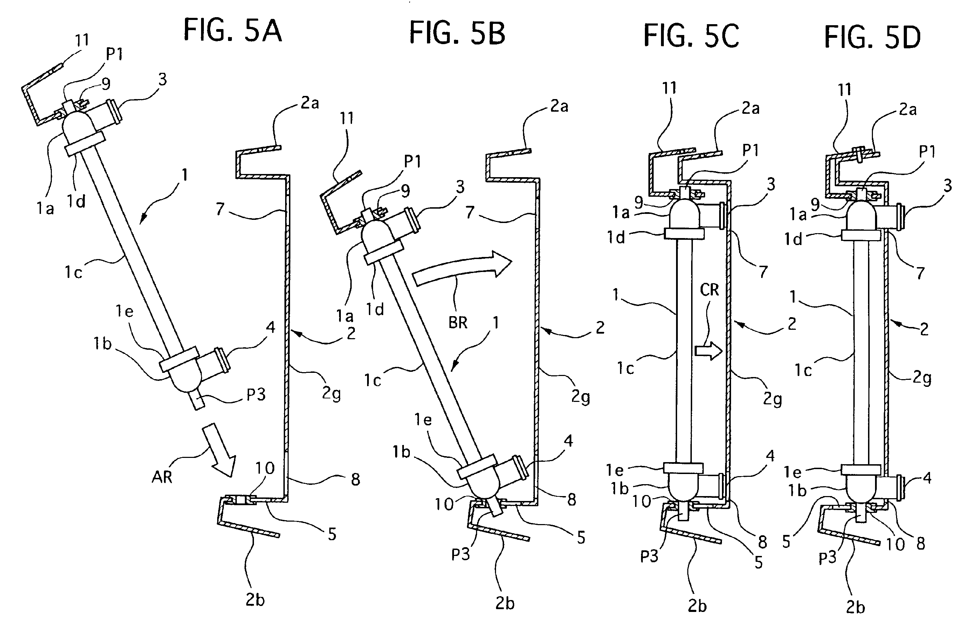

FIGS. 5A to 5D are side views illustrating how the heat exchanger and the radiator core support are assembled with each other in the radiator core support structure of the embodiment shown in FIGS. 1 to 4, FIG. 5A is a partially sectional side view of the radiator core support structure in a state where lower mounting pins of the heat exchanger are to be inserted into fixing holes of the radiator core support, FIG. 5B is a partially sectional side view of the radiator core support structure in a state where the heat exchanger partially sectional side view of the radiator core support structure in a state where the heat exchanger is stood erect, and FIG. 5D is a partially sectional side view of the radiator core support structure in a state where the heat exchanger is moved rearward for introducing its upper and lower pipes through upper and lower through-holes of the radiator core support;
FIG. 6 is an enlarged partially sectional side view of the radiator core support structure of the embodiment;
FIG. 7 is an enlarged perspective view of a lower elastic member for supporting the heat exchanger on the radiator core support;
FIG. 8A is a partially sectional side view of a lower mount structure of the heat exchanger on the radiator core support;
FIG. 8B is a side view of a modification of the lower mount structure shown in FIG. 8A;
FIG. 8C is a partially sectional side view of another modification of the lower mount structure shown in FIGS. 8A and 8B;
FIG. 9 is a perspective view of a radiator core support member of a second embodiment according to the present invention;
FIGS. 10A to 10C are side views illustrating how a heat exchanger and a radiator core support are assembled with each other in a conventional radiator core support structure, FIG. 10A is a partially sectional side view of the radiator core support structure in a state where mounting pins of the heat exchanger are to be inserted into fixing holes of the radiator core support, FIG. 10B is a partially sectional side view of the radiator core support structure in a state where the heat exchanger is turned rearward around the center of the fixing holes, and FIG. 10C is a partially sectional side view of the radiator core support structure in a state where the heat exchanger is stood erect and its upper and lower pipes are introduced through upper and lower through-holes of the radiator core support; and
FIG. 11 is a rear entire view of the conventional radiator core support structure shown in FIGS. 10A to 10C.

Throughout the following detailed description, similar reference characters and numbers refer to similar elements in all figures of the drawings, and their descriptions are omitted for eliminating duplication.

A radiator core support structure of a first embodiment according to the present invention will be described with reference to the accompanying drawings. In this description, the terms "right", "left", "front", " rear", "forward" and " rearward" are those identified with respect to a vehicle body, not to those in the drawings.

Referring to FIGS. 1 to 3, the radiator core support structure are fixed to a front part of the vehicle body, not shown, and defines an engine room together with the vehicle body. The radiator core support structure includes a radiator 1 and a radiator core support 2. The radiator 1 acts as a heat exchanger of the present invention.

The radiator 1 comprises an upper tank 1a, a lower tank 1b arranged in parallel with and under the upper tank 1a, a radiator core 1c arranged between the upper and lower tanks 1a and 1b.

The upper tank 1a is provided on its top portion with an upper left mounting pin P1 and an upper right mounting pin P2, which project upward from the top portion and are arranged apart from each other in a width direction of the radiator 1 (corresponding to a lateral direction of the vehicle body when the radiator 1 is mounted on the vehicle body). The upper tank 1a is also provided on its right rear side with a first pipe 3 connected with a not-shown engine through a not-shown first communicating pipe so that coolant can flow between an inside of the upper tank 1a and the engine.

The lower tank 1b is provided on its bottom portion with a lower left mounting pin P3 and a lower right mounting pin P4, which project downward from the bottom portion and are arranged apart from each other in the width direction of the radiator 1. The lower tank 1b is also provided on its left rear side with a second pipe 4 connected with the engine through a not-shown second communicating pipe so that the coolant can flow between an inside of the lower tank 1b and the engine.

One of the first and second pipes 3 and 4 is an inlet pipe of the coolant, and the other of them is an outlet pipe of the coolant. The first and second pipes 3 and 4 of the embodiment are formed in a circular cylinder shape, but they may be formed in another shape, such as a quadratic cylinder shape, an elliptic cylinder or others.

The radiator core 1c has a plurality of core tubes and fins, which are alternately disposed, both not shown, so that the coolant can flow its way along the core tubes. The tubes and fins are arranged to extend in the width direction when the radiator core 1c is attached to the vehicle body. The radiator core 1c is fixed at its top portion to an upper tube plate 1d provided on a bottom of the upper tank 1a and at its bottom portion to a lower tube plate 1e provided on a top of the lower tank 1b.

Although the upper and lower tanks 1a and 1b are formed of resin, and the radiator core 1c is made of aluminum or aluminum base alloy in this embodiment, components of the radiator 1 may be made of any appropriate material, for example, all components may be made of aluminum.

The radiator core support 2 includes a radiator core support upper portion 2a, a radiator core support lower portion 2b, a radiator core support left side portion 2c, and a radiator core support right side portion 2d, which form a rectangular frame. The radiator core support 2 also has a shroud portion 2g at its rear side. The radiator core support upper portion 2a, the radiator core support lower portion 2b, the radiator core support left and right portions 2c and 2d and the shroud portion 2g are integrally formed of resin. The radiator core support lower portion 2b corresponds to a bottom portion of a radiator core support of the present invention, and the shroud portion 2g corresponds to an obstructing portion of the present invention.

The radiator core support upper portion 2a extends in the width direction when the radiator core support 2 is attached to the vehicle body. The upper portion 2a is U-letter shaped in cross-section, opening at its rear side, and has a plurality of ribs 2e formed inside the upper portion 2a for its reinforcement.

The radiator core support lower portion 2b is in parallel with and under the radiator core support upper portion 2a and extends in the width direction when the radiator core support 2 is attached to the vehicle body. The lower portion 2b is also U-letter shaped in cross-section, opening at its rear side, and has a plurality of ribs 2e formed inside the lower portion 2b for its reinforcement.

The lower portion 2b is provided on its upper horizontal wall with a left fixing hole 5 and a right fixing hole 6 which are apart from each other in the width direction for receiving the lower left mounting P3 and the lower right mounting pin P4, respectively. These left and right fixing holes 5 and 6 will be later described in detail.

The radiator core support left side portion 2c connects left edge portions of the radiator core support upper portion 2a and the radiator core support lower portion 2b. The left side portion 2c is formed with an upper bolt hole 20a on its upper projection and with two lower bolt holes 20b and 20c on its lower projection for attaching the radiator core support 2 to the front side of the vehicle body by bolts.

The radiator core support right side portion 2d connects right edge portions of the radiator core support upper portion 2a and the radiator core support lower portion 2b. The right side portion 2d is formed with an upper bolt hole 21a on its upper projection and with two lower bolt holes 21b and 21c on its lower projection for attaching the radiator core support 2 to the front side of the vehicle body by bolts.

The shroud portion 2g is disposed in the engine room formed at a rear side of the radiator core support 2, and is made of a rectangular plate with a circular opening 2h at its center for flowing the air toward the engine through the radiator 1. In this circular opening 2h, a not-shown fan driven by an electric motor is installed. The shroud portion 2g is formed with a first through-hole 7 on its upper right side position and with a second through-hole 8 on its lower left side for receiving the first pipe 3 and the second pipe 4 of the radiator 1 when the radiator 1 is attached to the radiator core support 2, respectively. These first and second through-holes 7 and 8 will be later described in detail.

In this embodiment, all portions of the radiator core support 2 are formed of resin, but its material is not limited to resin and appropriate material may be used. For example, all portions of the radiator core support 2 may be formed of metal, or its some portions may be formed of metal and the other may be formed of resin.

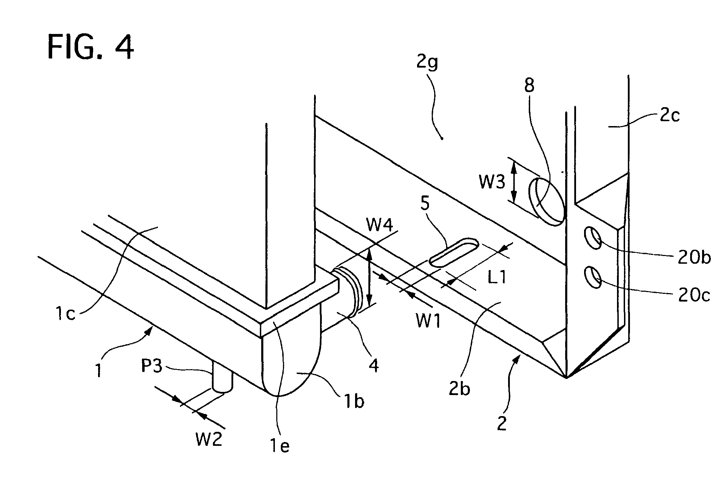

Referring to FIG. 4, there is shown in enlargement a left lower part of the radiator core support structure of the embodiment.

As shown in FIG. 4, the first fixing hole 5 is formed as an elongate hole shaped like a rectangular shape, extending in a thickness direction of the radiator core support 2 (corresponding to a longitudinal direction of the vehicle body when the radiator core support 2 is attached to the vehicle body) and having a length L1 and a width W1. The length L1 is set long enough so that it is longer than a diameter W2 of the lower left mounting pin P3 and allows the radiator 1 with the pins P3 and P4 inserted in the fixing holes 5 and 6 to be turned around a front side of the first fixing hole 5 without an interference between the first and second pipes 3 and 4 and the radiator core support 2. The width W1 is set to be slightly larger than the diameter W2.

The second fixing hole 6 is, which is not shown in FIG. 4, set in its length and width according to the lower right mounting pin P4 similarly to those of the first fixing hole 5.

The second through-hole 8 is set to have a diameter W3, which is smaller than that of the prior art but slightly larger than a diameter W4 of the second pipe 4. That is, the diameter W3 of the second through-hole 8 is set so that the second pipe 4 is insertable into the second through-hole 8 by moving the radiator 1 in a substantially horizontal direction, not turning it around the lower left and right fixing holes 5 and 6.

A diameter of the first through-hole 7, which is not shown in FIG. 4, is also set according to that of the first pipe 3 similarly to a relationship between the second through-hole 8 and the second pipe 4.

Note that, in FIGS. 1 to 4, two upper elastic members, an upper bracket and two lower elastic members are omitted to facilitate understanding of the radiator core support structure, but FIGS. 5A to 6 shows the radiator core structure with the elastic members and bracket.

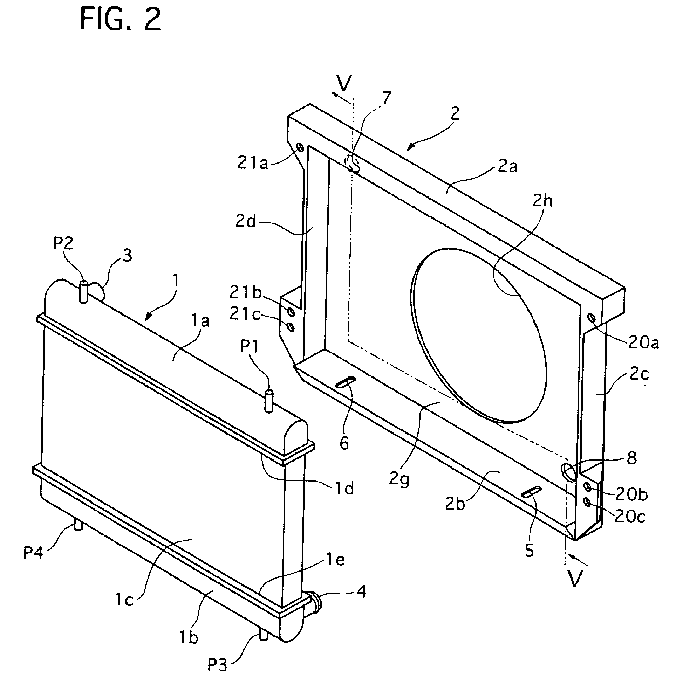

Next, how to assemble the radiator 1 and the radiator core support 2 will be described with reference of the drawings of FIG. 5A to 5D, which are partially sectional views taken along a line V-V in FIG. 2.

The radiator 1 and the radiator core support 2 are provided. The upper mounting pins P1 and P2 of the radiator 1, although the pin P2 is not shown in FIGS. 5A to 5D, are joined to a bracket 11 through two upper elastic members 9. Two lower elastic members 10 are fitted into the fixing holes 5 and 6, although the hole 6 is not shown in FIGS. 5A to 5D, at their front sides of the holes 5 and 6, respectively, so that gaps are formed between the lower elastic members 10 and rear walls defining the holes 5 and 6. Accordingly, the pins P3 and P4 and the lower elastic members 10 are slidable rearward along the holes 5 and 6.

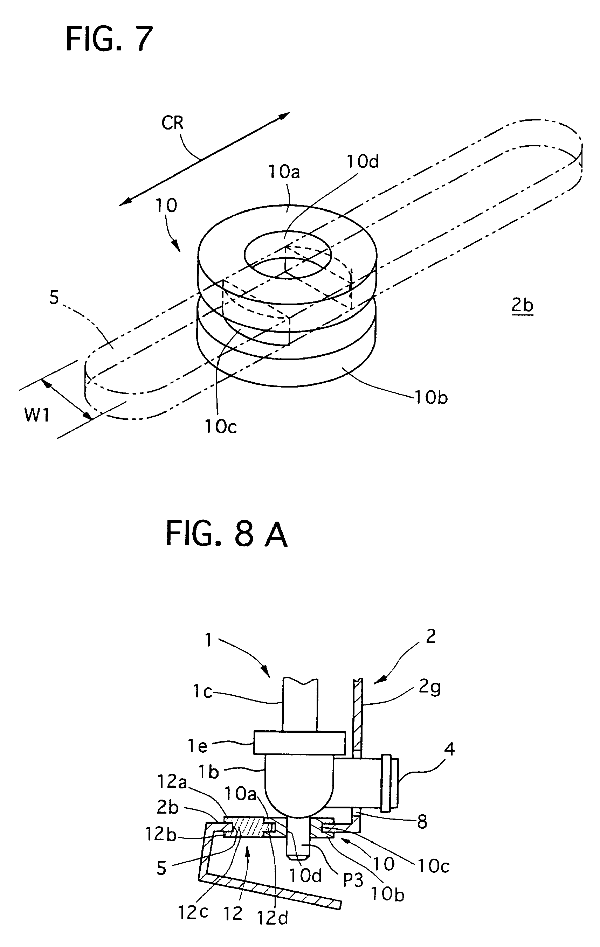

As shown in FIG. 7, the lower elastic member 10 has an upper supporting portion 10a, a lower supporting portion 10b, and an intermediate portion 10c between the upper and lower supporting portions 10a and 10b. The upper and lower supporting portions 10a and 10b have a diameter larger than the width W1 of the hole 5 (and the hole 6), while the intermediate portion 10c has a diameter slightly larger than the width W1, being elastically deformable and insertable into the hole 5, as shown in FIG. 7. The elastic member 10 is formed at its center with a hole 10d for receiving one of the lower left and right pins P3 and P4.

As shown in FIG. 5A, the radiator 1 is picked up and moved diagonally downward from its front side toward its rear side as indicated by an arrow AR in FIG. 5A so that the lower mounting pins P3 and P4, although the pin P4 is not shown in FIG. 5A, are inserted into the hole 10d of the lower elastic members 10, which is disposed into the fixing holes 5 and 6 in prior to this insertion.

After the insertion of the pins P3 and P4 into the elastic members 10, as shown in FIG. 5B, the radiator 1 is turned around the front sides of the lower fixing holes 5 and 6 in a direction indicated by an arrow BR in FIG. 5B so as to stand erect. During this turning the radiator 1, the first pipe 3 and the second pipe 4 do not interfere with the radiator core support 2, since a turning center of the radiator 1 is located at the front sides of the elongate fixing holes 5 and 6 to keep the radiator 1 away from the radiator core support 2 toward the front side of the radiator core support 2.

Then, the radiator 1 standing vertically is moved rearward (toward the shroud portion 2g) in the horizontal direction, indicated by an arrow CR as shown in FIG. 5C, so that the first pipe 3 can be inserted into the first through-hole 7 and the second pipe 4 can be inserted into the second through-hole 8. as a result, the pipes 3 and 4 projects from the holes 7 and 8, respectively, when the elastic member 10 is located at rear sides of the holes 5 and 6.

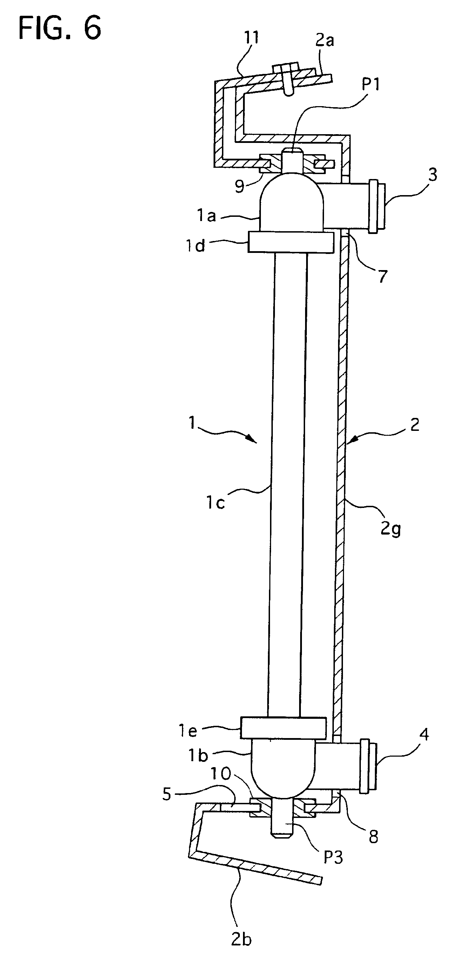

The bracket 11 is fixed to the upper portion 2a of the radiator core support 2 by bolts as shown in FIG. 5D and FIG. 6. Then, as shown in FIG. 8A, an elastic plug 12 is inserted into and fills in a gap formed between the lower elastic member 10 and a front wall defining the hole 5 (the front side of the hole 5) so as to fix the lower elastic member 10 at the rear side of the hole 5. The front side of the hole 6 is filled in by the elastic plug 12 similarly.

The elastic plug 12 has an upper supporting portion 12a, a lower supporting portion 12b, an intermediate portion 12c between the upper and lower supporting portions 12a and 12b, and a projecting portion 12d. The upper and lower supporting portions 12a and 12b has a width broader than the width W 1 of the hole 5, while the intermediate portion 12c has a width slightly broader than the width W1, being elastically deformable and insertable into the holes 5 and 6. The intermediate portion 12c has a groove for receiving the lower portion 2b of the radiator core support 2 at its one side, and the projecting portion 12d insertable into a groove formed between the supporting portions 10a and 10b of the elastic member 10 at its opposite side.

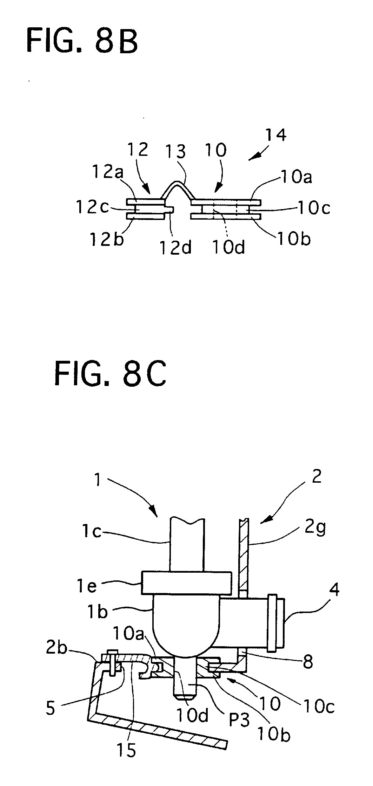

In the embodiment of FIG. 8A, the elastic member 10 and the elastic plug 12 are formed independently from each other, but they may be integrally formed to have a thin flexible connecting portion 13 connecting them as shown in FIG. 8B. In this modified embodiment, the elastic members 10 are inserted into the fixing holes 5 and 6 without inserting the elastic plugs 12 before the lower mounting pins P3 and P4 of the radiator 1 are inserted into the elastic members 10. After sliding the elastic members 10 toward the shroud portion 2g together with the elastic plugs 12, the elastic plugs 12 are inserted into the front sides of the holes 5 and 6, and their connecting portions 12d are fit to the grooves of the elastic members 10 to fix their position. The elastic plug 12 is integrally connected with the elastic member 10 through the connecting portion 13, which enables them to be easily handled in their assembly.

The above-constructed radiator core support structure is fixed to the front side of the vehicle body, and the pipes 3 and 4 are connected to the engine through the communicating pipes.

The radiator 1 acts as a heat exchanger as follows. Hot coolant heated by the engine is led in the upper tank 1a of the radiator 1 through the first communicating pipe and the first pipe 3, and then flows core tubes of the radiator core 1c to exchange its heat between the coolant and the flowing air, which is caused by driving the fan or running a vehicle. Accordingly, the cooled coolant is led to the lower tank 1b, and then to the engine through the second pipe 4 and the second communicating pipe.

The radiator core structure of the first embodiment has the following advantages.

The radiator core support structure of the first embodiment is constructed to have the elongate fixing holes 5 and 6, for receiving the lower mounting pins P3 and P4 of the radiator 1, extending in the longitudinal direction when the radiator core support 2 is attached to the front side of the vehicle body. This enables the radiator 1 to be turned to stand erect without an interference between the first and second pipes 3 and 4 and the radiator core support 2, and also to move horizontally toward the shroud portion 2g in a state where the radiator I stands erect with its lower mounting pins P3 and P4 being supported by the fixing holes 5 and 6.

Therefore, the first and second pipe 3 and 4 can be introduced through the first and second through-holes 7 and 8 by moving the radiator 1 in axial directions of the pipes 3 and 4 (in the horizontal direction), respectively. This enables the first and second through-holes 7 and 8 to be formed smaller in area than the elongate through-holes of the prior art. This smaller through-holes 7 and 8 can decrease the blow-back toward the radiator 1 of the hot air heated by the engine through the holes 7 and 8 and further suppress stiffness reduction of the through-hole peripheral portion of the radiator core support 2.

These advantages can be obtained without an additional wind-protecting member, disposed in the gap between the pipes 3 and 4 and the through-holes 7 and 8, and a thicker through-hole peripheral portion of the radiator core support 2. Accordingly, the radiator core support structure of the embodiment can reduce its weight, its manufacturing cost, the number of parts and man-hour of its assembly.

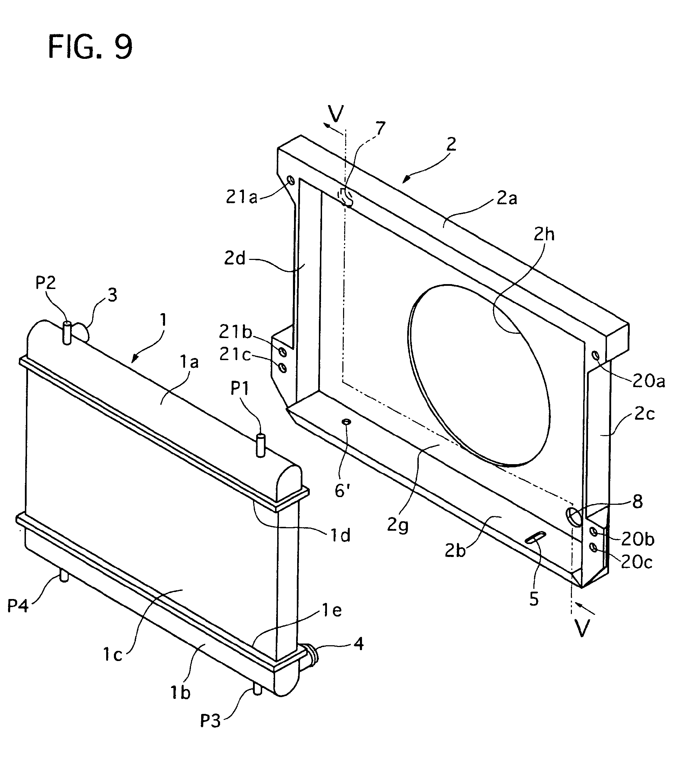

Next, a radiator core support structure of a second embodiment will be described with reference to the accompanying drawing of FIG. 9.

The radiator core structure of the second embodiment includes a radiator 1 and a radiator core support 2. The radiator core support 2 has a lower portion 2b formed with a lower left fixing hole 5 and a lower right hole 6', which are apart from each other in a lateral direction of the radiator core support 2.

The lower left fixing hole 5 is formed to be an elongate hole extending forward for allowing a lower left mounting pin P3 to slide along it.

The lower right hole 6' is formed to be a round hole with a diameter slightly larger than that of the lower right pin P4. The lower right hole 6' acts as a slide-preventing hole of the present invention.

The other parts of the radiator core support structure of the second embodiment are similar to those of the first embodiment.

In this embodiment, the lower left pin P3 is inserted in a front side of the lower left fixing hole 5, and the lower right pin P4 is inserted in the lower right hole 6' in a state that the radiator 1 is tilted forward relative to the lower portion 2b of the radiator core support 2 and turned around the lower right hole 6'.

Then, the radiator 1 is turned toward a shroud portion 2g of the radiator core support 2 by moving the lower left mounting pin P3 rearward along the lower left fixing hole 5 and stood erect. This movement brings first and second pipes 3 and 4 to be inserted in through-holes 7 and 8 formed on the shroud portion 2g, respectively.

Two upper mounting pins P1 and P2 of the radiator 1 are supported to an upper portion 2a of the radiator core support 2 through a bracket similar to the bracket 11 shown in FIG. 6.

The lower right hole 6' as the slide-preventing hole receives the lower mounting pin P4 arranged at a side of the first pipe 3, and the lower left fixing hole 5 as the fixing hole receives the lower mounting pin P3 arranged at a side of the second pipe 4 which is disposed under the first pipe 3.

In this embodiment, the radiator 1 can be three-point supported by the upper left and right pins P1 and P2 and the lower right pin P4 to retain the radiator 1 in forward and reward directions, which may remove a holder for covering a gap formed in a front portion of the lower left fixing hole 5. This removal reduces manufacturing process and cost.

While there have been particularly shown and described with reference to preferred embodiments thereof, it will be understood that various modifications may be made therein.

For example, the fixing holes 5 and 6, through-holes 7 and 8, mounting pins P1 to P4 may be formed in an arbitrary shape as long as it has function similar to that of the embodiment described above. That is, the fixing holes 5 and 6 is not limited to the rectangular shape of the embodiment, and may be formed at least to have a gap, for avoiding the interference between the first and second pipes 3 and 4 and the radiator core support 2 in turning the radiator 1, in front of the mounting pin(s) P3 and/or P4 when located at fixed position(s).

In the embodiment, the radiator 1 is used as a heat exchanger, but a condenser may be used as the heat exchanger instead of or in addition to the radiator 1. In this case, the condenser is connected with refrigerant pipes and a receiver.

The first and second pipes 3 and 4 of the radiator 1 are introduced through the through-holes 7 and 7 formed on the shroud portion 2g in the embodiment, but the pipes 3 and 4 and/or pipes of the condenser may be set to be introduced through other portion of the radiator core support 2 according to a layout of the pipes.

The upper tank 1a and the lower tank 1b of the radiator 1 in the embodiment may be replaced by a left side tank with a first pipe and a right side tank with a second pipe. One of the first and second pipes is set to be an input pipe, and the other of them is set to be an outlet pipe.

The elastic plug 12 may be replaced by a metal or plastic bracket 15 fixable to the lower portion 2b of the radiator core support 2 by bolts for retaining the elastic member 10 at its fixed position as shown in FIG. 8C. The elastic plug 12 and the metal bracket 15 act as a holder of the present invention.

The obstructing portion of the present invention is not limited to the shroud portion 2g of the radiator 1, and may be other portion of a heat exchanger where a pipe can not penetrate without a hole.

The number of the lower mounting pins and the fixing holes is set arbitrarily.

In the assembly of the radiator core support structure, the elastic members 10 may be putted on the mounting pins P3 and P4 before the elastic members 10 are inserted in the fixing holes 5 and 6.

## Claims

1. Radiator core support structure comprising:
a radiator core support (2) to be fixed to a vehicle body, the radiator core support (2) having an obstructing portion (2g) formed with through-holes (7, 8) communicating a front side and a rear side thereof and a lower portion (2b) formed with fixing holes (5, 6) on an upper surface of the lower portion (2b); and
a heat exchanger (1) provided with pipes (3, 4) projecting rearward from the heat exchanger (1) to be introduced through the through-holes (7, 8) of the radiator core support (2) when the heat exchanger (1) is attached to the radiator core support (2), the heat exchanger (1) having a bottom portion (1b) with lower mounting pins (P3, P4) projecting downward from the bottom portion (1b) to be inserted in the fixing holes (5, 6) when the heat exchanger (1) is attached to the radiator core support (2), wherein at least one of
the fixing holes (5, 6) is formed as an elongated hole extending toward the front side so that the pipes (3, 4) can be kept free from an interference between the pipes (3, 4) and the radiator core support (2) when the lower mounting pins (P3, P4) are inserted diagonally from a front side of the radiator core support (2) into a front side of the fixing holes (5, 6) and the heat exchanger (1) is turned rearward around the front side of the fixing holes (5, 6) to stand erect, **characterized in that** at least one of the fixing holes (5, 6) allowing at least one of the lower mounting pins (P3, P4) to be slid rearward for introducing the pipes (3, 4) through the through-holes (7, 8).

2. Radiator core support structure according to claim 1, **characterized in that** the lower mounting pins (P3, P4) comprise a lower left mounting pin (P3) and a lower right mounting pin (P4) which are apart from each other in a lateral direction of the vehicle body when the heat exchanger (1) is attached to the radiator core support (2), and wherein
the fixing holes (5, 6) comprise a left fixing hole (5) and a right fixing hole (6) for receiving the left mounting pin (P3) and the right fixing pin (P4), respectively.

3. Radiator core support structure according to claim 1 or 2, **characterized in that**
the lower portion (2b) of the radiator core support (2) has a slide-preventing hole (6'), and wherein
the lower mounting pins (P3, P4) comprise a lower left mounting pin (P3) and a lower right mounting pin (P4) which are apart from each other in a lateral direction of the vehicle body, one of the lower left and right mounting pins (P3, P4) being inserted in the fixing hole (5) and the other of the lower left and right mounting pins (P3, P4) being inserted in the slide-preventing hole (6') when the heat exchanger (1) is attached to the radiator core support (2).

4. Radiator core support structure according to claim 3, **characterized in that**
the pipes (3, 4) comprise a first pipe (3) and a second pipe (4) disposed under the first pipe (3), and wherein
the slide-preventing hole (6') receives the lower mounting pin (P4) arranged at a side of the first pipe (3), and the fixing hole (5) receives the lower mounting pin (P3) arranged at a side of the second pipe (4).

5. Radiator core support structure according to claim 4, **characterized in that**
the heat exchanger (1) has an upper left mounting pin (P1) and an upper right mounting pin (P2) on a top portion of the heat exchanger (1), the upper left and right mounting pins (P1, P2) being apart from each other in a lateral direction of the heat exchanger (1) and supported by an upper potion of the radiator core support (2) so that the heat exchanger (1) is fixed by three-point support of the upper left and right mounting pins (P1, P2) and the one (P3) of the lower left and right mounting pins (P3, P4) inserted in the slide-preventing hole (6').

6. Radiator core support structure according to any one of claims 1 to 5, further comprising
elastic members (10) insertable in and slidable along the fixing holes (5, 6) and formed to receive the lower mounting pins (P3, P4).

7. Radiator core support structure according to any one of claims 1 to 6, **characterized in that**
the obstructing portion (2g) is a shroud portion (2g).

8. Radiator core support structure according to any one of claims 1 to 7, **characterized in that**
the heat exchanger (1) is at least one of a radiator (1) and a condenser.

9. Method for assembling a radiator core support structure, the method comprising:
preparing a radiator core support (2) to be fixed to a vehicle body, the radiator core support (2) having an obstructing portion (2g) formed with through-holes (7, 8) communicating a front side and a rear side thereof and a lower portion (2b) formed with fixing holes (5, 6) on an upper surface of the lower portion (2b);
preparing a heat exchanger (1) provided with pipes (3, 4) projecting rearward from the heat exchanger (1) to be introduced through the through-holes (7, 8) of the radiator core support (2) when the heat exchanger (1) is attached to the radiator core support (2), the heat exchanger (1) having a bottom portion (1b) with lower mounting pins (P3, P4) projecting downward from the bottom portion (1b) to be inserted in the fixing holes (5, 6) when the heat exchanger (1) is attached to the radiator core support (2);
inserting the lower mounting pins (P3, P4) diagonally from a front side of the radiator core support (2) into a front side of the fixing holes (5, 6);
turning the heat exchanger (1) rearward around the front side of the fixing holes (5, 6) to stand erect, **characterized in that**
inserting the lower mounting pins (P3, P4) into the fixing holes (5, 6) is made in such a way that at least one of the lower mounting pins (P3, P4) is inserted more forward relative to the other thereof so that the pipes (3, 4) is kept free from an interference between the pipes (3, 4) and the radiator core support (2) while the heat exchanger (1) is turned rearward; and
the heat exchanger (1)is moved rearward in a substantially horizontal direction after the heat exchanger (1) is turned rearward so that the one of the lower mounting pins (P3, P4) is slid along at least one of the fixing holes (5, 6) and the pipes (3, 4) can be introduced through the through-holes (7,8).

10. Method for assembling according to claim 9, **characterized in that**
the lower mounting pins (P3, P4) comprise a lower left mounting pin (P3) and a lower right mounting pin (P4) which are apart from each other in a lateral direction of the vehicle body when the heat exchanger (1) is attached to the radiator core support (2), and the fixing holes (5, 6) comprises a left fixing hole (5) and a right fixing hole (6) for receiving the left mounting pin (P3) and the right fixing pin (P4), respectively, and wherein
the heat exchanger (1) has an upper left mounting pin (P1) and an upper right mounting pin (P2) on a top portion of the heat exchanger (1), the upper left and right mounting pins (P1, P2) being apart from each other in a lateral direction of the heat exchanger (1) and supported by an upper potion of the radiator core support (2) so that the heat exchanger (1) is fixed by three-point support of the upper left and right mounting pins (P1, P2) and the one (P3) of the lower left and right mounting pins (P3, P4) inserted in the slide-preventing hole (6').

## Patentansprüche

1. Kühlerkern-Stützkonstruktion, umfassend:
eine an einer Fahrzeugkarosserie zu befestigende Kühlerkernhalterung (2), wobei die Kühlerkernhalterung (2) einen mit Durchgangslöchern (7, 8) ausgebildeten Sperrabschnitt (2g) zur Verbindung einer Vorderseite und einer Rückseite derselben und einen unteren Abschnitt (2b) aufweist, der mit Befestigungslöchern (5, 6) auf einer oberen Fläche des unteren Abschnitts (2b) ausgebildet ist, und
einen Wärmetauscher (1), der mit Rohren (3, 4) versehen ist, die von dem Wärmetauscher (1) nach hinten vorstehen und in die Durchgangslöcher (7, 8) der Kühlerkernhalterung (2) eingeführt werden, wenn der Wärmetauscher (1) an der Kühlerkernhalterung (2) befestigt wird, wobei der Wärmetauscher (1) einen unteren Abschnitt (1 b) mit unteren Befestigungsstiften (P3, P4) aufweist, die von dem unteren Abschnitt (1 b) nach unten vorstehen und in die Befestigungslöcher (5, 6) eingesetzt werden, wenn der Wärmetauscher (1) an der Kühlerkernhalterung (2) befestigt wird,
wobei wenigstens eines der Befestigungslöcher (5, 6) als Langloch ausgebildet ist, das sich derart zur Vorderseite hin erstreckt, daß die Rohre (3, 4) frei von einer Behinderung zwischen den Rohren (3, 4) und der Kühlerkernhalterung (2) gehalten werden, wenn die unteren Befestigungsstifte (P3, P4) diagonal von einer Vorderseite der Kühlerkernhalterung (2) aus in eine Vorderseite der Befestigungslöcher (5, 6) eingesetzt werden und der Wärmetauscher (1) um die Vorderseite der Befestigungslöcher (5, 6) herum nach hinten gedreht wird, um aufrecht zu stehen,
**dadurch gekennzeichnet, daß**
es wenigstens eines der Befestigungslöcher (5, 6) zuläßt, daß wenigstens einer der unteren Befestigungsstifte (P3, P4) nach hinten geschoben wird, um die Rohre (3, 4) durch die Durchgangslöcher (7, 8) hindurch einzuführen.

2. Kühlerkern-Stützkonstruktion nach Anspruch 1, **dadurch gekennzeichnet, daß** die unteren Befestigungsstifte (P3, P4) einen unteren linken Befestigungsstift (P3) und einen unteren rechten Befestigungsstift (P4) umfassen, die in einer seitlichen Richtung der Fahrzeugkarosserie voneinander getrennt sind, wenn der Wärmetauscher (1) an der Kühlerkernhalterung (2) befestigt wird, und wobei
die Befestigungslöcher (5, 6) ein linkes Befestigungsloch (5) und ein rechtes Befestigungsloch (6) jeweils zum Aufnehmen des linken Befestigungsstifts (P3) und des rechten Befestigungsstifts (P4) umfassen.

3. Kühlerkern-Stützkonstruktion nach Anspruch 1 oder 2, **dadurch gekennzeichnet, daß**
der untere Abschnitt (2b) der Kühlerkernhalterung (2) ein das Verrutschen verhinderndes Loch (6') aufweist, und wobei
die unteren Befestigungsstifte (P3, P4) einen unteren linken Befestigungsstift (P3) und einen unteren rechten Befestigungsstift (P4) umfassen, die in einer seitlichen Richtung der Fahrzeugkarosserie voneinander getrennt sind, wobei einer der unteren linken und rechten Befestigungsstifte (P3, P4) in das Befestigungsloch (5) eingesetzt wird und der andere der unteren linken und rechten Befestigungsstifte (P3, P4) in das ein Verrutschen verhindernde Loch (6') eingesetzt wird, wenn der Wärmetauscher (1) an der Kühlerkernhalterung (2) befestigt wird.

4. Kühlerkern-Stützkonstruktion nach Anspruch 3, **dadurch gekennzeichnet, daß**
die Rohre (3, 4) ein erstes Rohr (3) und ein unter dem ersten Rohr (3) angeordnetes zweites Rohr (4) umfassen, wobei
das ein Verrutschen verhindernde Loch (6') den unteren Befestigungsstift (P4) aufnimmt, der an einer Seite des ersten Rohres (3) angeordnet ist, und das Befestigungsloch (5) den unteren Befestigungsstift (P3) aufnimmt, der an einer Seite des zweiten Rohres (4) angeordnet ist.

5. Kühlerkern-Stützkonstruktion nach Anspruch 4, **dadurch gekennzeichnet, daß**
der Wärmetauscher (1) an einem oberen Abschnitt des Wärmetauschers (1) einen oberen linken Befestigungsstift (P1) und einen oberen rechten Befestigungsstift (P2) aufweist, wobei die oberen linken und rechten Befestigungsstifte (P1, P2) in einer seitlichen Richtung des Wärmetauschers (1) voneinander getrennt sind und von einem oberen Abschnitt der Kühlerkernhalterung (2) abgestützt werden, so daß der Wärmetauscher (1) durch eine Dreipunkthalterung der oberen linken und rechten Befestigungsstifte (P1, P2) und des einen (P3) von den unteren linken und rechten Befestigungsstiften (P3, P4) befestigt ist, der in das ein Verrutschen verhindernde Loch (6') eingesetzt ist.

6. Kühlerkern-Stützkonstruktion nach einem der Ansprüche 1 bis 5, außerdem mit
elastischen Gliedern (10), die in die Befestigungslöcher (5, 6) einführbar und entlang denselben verschieblich sind und zum Aufnehmen der unteren Befestigungsstifte (P3, P4) ausgebildet sind.

7. Kühlerkern-Stützkonstruktion nach einem der Ansprüche 1 bis 6, **dadurch gekennzeichnet, daß**
der Sperrabschnitt (2g) ein Verkleidungsabschnitt (2g) ist.

8. Kühlerkern-Stützkonstruktion nach einem der Ansprüche 1 bis 7, **dadurch gekennzeichnet, daß**
der Wärmetauscher (1) ein Kühler (1) oder ein Kondensator ist.

9. Montageverfahren für eine Kühlerkern-Stützkonstruktion, wobei das Verfahren umfaßt:
Herstellen einer an einer Fahrzeugkarosserie zu befestigenden Kühlerkernhalterung (2), wobei die Kühlerkernhalterung (2) einen mit Durchgangslöchern (7, 8) ausgebildeten Sperrabschnitt (2g) zur Verbindung einer Vorderseite und einer Rückseite derselben und einen unteren Abschnitt (2b) aufweist, der mit Befestigungslöchern (5, 6) auf einer oberen Fläche des unteren Abschnitts (2b) ausgebildet ist;
Herstellen eines Wärmetauschers (1), der mit Rohren (3, 4) versehen ist, die von dem Wärmetauscher (1) nach hinten vorstehen und in die Durchgangslöcher (7, 8) der Kühlerkernhalterung (2) eingeführt werden, wenn der Wärmetauscher (1) an der Kühlerkernhalterung (2) befestigt wird, wobei der Wärmetauscher (1) einen unteren Abschnitt (1b) mit unteren Befestigungsstiften (P3, P4) aufweist, die von dem unteren Abschnitt (1 b) nach unten vorstehen und in die Befestigungslöcher (5, 6) eingesetzt werden, wenn der Wärmetauscher (1) an der Kühlerkernhalterung (2) befestigt wird,
Einsetzen der unteren Befestigungsstifte (P3, P4) diagonal von einer Vorderseite der Kühlerkernhalterung (2) aus in eine Vorderseite der Befestigungslöcher (5, 6);
Drehen des Wärmetauschers (1) um die Vorderseite der Befestigungslöcher (5, 6) herum nach hinten, so daß er aufrecht steht,
**dadurch gekennzeichnet, daß**
das Einsetzen der unteren Befestigungsstifte (P3, P4) in die Befestigungslöcher (5, 6) in einer solchen Weise erfolgt, daß mindestens einer der unteren Befestigungsstifte (P3, P4) weiter vorn relativ zu dem anderen derselben eingesetzt wird, so daß die Rohre (3, 4) frei von einer Behinderung zwischen den Rohren (3, 4) und der Kühlerkernhalterung (2) gehalten werden, während der Wärmetauscher (1) nach hinten gedreht wird, und
der Wärmetauscher (1) in einer im wesentlichen horizontalen Richtung nach hinten bewegt wird, nachdem der Wärmetauscher (1) nach hinten gedreht ist, so daß der eine der unteren Befestigungsstiften (P3, P4) entlang mindestens eines der Befestigungslöcher (5, 6) geschoben wird und die Rohre (3, 4) durch die Durchgangslöcher (7, 8) hindurch eingeführt werden können.

10. Montageverfahren nach Anspruch 9, **dadurch gekennzeichnet, daß**
die unteren Befestigungsstifte (P3, P4) einen unteren linken Befestigungsstift (P3) und einen unteren rechten Befestigungsstift (P4) umfassen, die in einer seitlichen Richtung der Fahrzeugkarosserie voneinander getrennt sind, wenn der Wärmetauscher (1) an der Kühlerkernhalterung (2) befestigt wird, und die Befestigungslöcher (5, 6) ein linkes Befestigungsloch (5) und ein rechtes Befestigungsloch (6) jeweils zum Aufnehmen des linken Befestigungsstifts (P3) und des rechten Befestigungsstifts (P4) umfassen, und wobei
der Wärmetauscher (1) an einem oberen Abschnitt des Wärmetauschers (1) einen oberen linken Befestigungsstift (P1) und einen oberen rechten Befestigungsstift (P2) aufweist, wobei die oberen linken und rechten Befestigungsstifte (P1, P2) in einer seitlichen Richtung des Wärmetauschers (1) voneinander getrennt sind und von einem oberen Abschnitt der Kühlerkernhalterung (2) abgestützt werden, so daß der Wärmetauscher (1) durch eine Dreipunkthalterung der oberen linken und rechten Befestigungsstifte (P1, P2) und des einen (P3) der unteren linken und rechten Befestigungsstifte (P3, P4) befestigt ist, der in das ein Verrutschen verhindernde Loch (6') eingesetzt ist.

## Revendications

1. Structure de support de bloc de radiateur comprenant :
un support de bloc de radiateur (2) destiné à être fixé sur une carrosserie de véhicule, le support de bloc de radiateur (2) ayant une partie de cache (2g) formée avec des trous de passages (7, 8) faisant communiquer un côté avant et un côté arrière de celle-ci et une partie inférieure (2b) formée avec des trous de fixation (5, 6) sur une surface supérieure de la partie inférieure (2b) ; et
un échangeur de chaleur (1) pourvu de tuyaux (3, 4) faisant saillie vers l'arrière depuis l'échangeur de chaleur (1) pour être introduits par les trous de passages (7, 8) du support de bloc de radiateur (2) quand l'échangeur de chaleur (1) est fixé sur le support de bloc de radiateur (2), l'échangeur de chaleur (1) ayant une partie inférieure (1b) avec des axes de montage inférieurs (P3, P4) faisant saillie vers le bas depuis la partie inférieure (1b) pour être insérés dans les trous de fixation (5, 6) quand l'échangeur de chaleur (1) est fixé sur le support de bloc de radiateur (2), dans lequel au moins un des
trous de fixation (5, 6) est formé comme un trou allongé s'étendant vers le côté avant de telle manière que les tuyaux (3, 4) peuvent être tels qu'il n'y a pas d'interférence entre les tuyaux (3, 4) et le support de bloc de radiateur (2) quand les axes de montage inférieurs (P3, P4) sont insérés diagonalement depuis un côté avant du support de bloc de radiateur (2) dans un côté avant des trous de fixation (5, 6) et l'échangeur de chaleur (1) est tourné vers l'arrière autour du côté avant des trous de fixation (5, 6) pour se tenir dressé, **caractérisée en ce qu'**au moins l'un des trous de fixation (5, 6) permet à au moins l'un des axes de montage inférieurs (P3, P4) de coulisser vers l'arrière pour introduire les tuyaux (3, 4) à travers les trous de passages (7, 8).

2. Structure de support de bloc de radiateur selon la revendication 1, **caractérisée en ce que** les axes de montage inférieurs (P3, P4) comprennent un axe de montage inférieur gauche (P3) et un axe de montage inférieur droit (P4) qui sont éloignés l'un de l'autre dans une direction latérale de la carrosserie de véhicule quand l'échangeur de chaleur (1) est fixé sur le support de bloc de radiateur (2), et dans lequel
les trous de fixation (5, 6) comprennent un trou de fixation gauche (5) et un trou de fixation droit (6) pour recevoir l'axe de montage gauche (P3) et l'axe de montage droit (P4) respectivement.

3. Structure de support de bloc de radiateur selon la revendication 1 ou 2, **caractérisée en ce que**
la partie inférieure (2b) du support de bloc de radiateur (2) a un trou anti-coulissement (6'), et dans lequel
les axes de montage inférieurs (P3, P4) comprennent un axe de montage inférieur gauche (P3) et un axe de montage inférieur droit (P4) qui sont éloignés l'un de l'autre dans une direction latérale de la carrosserie de véhicule, l'un des axes de montage inférieurs (P3, P4) étant inséré dans le trou de fixation (5) et l'autre des axes de montage inférieurs gauche et droit (P3, P4) étant inséré dans le trou anti-coulissement (6') quand l'échangeur de chaleur (1) est fixé sur le support de bloc de radiateur (2).

4. Structure de support de bloc de radiateur selon la revendication 3, **caractérisée en ce que**
les tuyaux (3, 4) comprennent un premier tuyau (3) et un second tuyau (4) disposé sous le premier tuyau (3), et dans lequel
le trou anti-coulissement (6') reçoit l'axe de montage inférieur (P4) agencé d'un côté du premier tuyau (3), et le trou de fixation (5) reçoit l'axe de montage inférieur (P3) agencé d'un côté du second tuyau (4).

5. Structure de support de bloc de radiateur selon la revendication 4, **caractérisée en ce que**
l'échangeur de chaleur (1) a un axe de montage supérieur gauche (P1) et un axe de montage supérieur droit (P2) sur une partie supérieure de l'échangeur de chaleur (1), les axes de montage supérieurs gauche et droit (P1, P2) étant éloignés l'un de l'autre dans une direction latérale de l'échangeur de chaleur (1) et supportés par une partie supérieure du support de bloc de radiateur (2) de telle manière que l'échangeur de chaleur (1) est fixé par un support en trois points composé des axes de montage gauche et droit (P1, P2) et du premier (P3) des axes de montage gauche et droit (P3, P4) inséré dans le trou anti-coulissement (6').

6. Structure de support de bloc de radiateur selon l'une quelconque des revendications 1 à 5, comprenant en outre
des éléments élastiques (10) pouvant être insérés dans et pouvant coulisser le long des trous de fixation (5, 6) et formés pour recevoir les axes de montage inférieurs (P3, P4).

7. Structure de support de bloc de radiateur selon l'une quelconque des revendications 1 à 6, **caractérisée en ce que**
la partie de cache (2g) est une partie de déflecteur de ventilateur (2g).

8. Structure de support de bloc de radiateur selon l'une quelconque des revendications 1 à 7, **caractérisée en ce que**
l'échangeur de chaleur (1) est au moins un radiateur (1) ou un condenseur.

9. Procédé d'assemblage d'une structure de support de bloc de radiateur, le procédé comprenant :
préparer un support de bloc de radiateur (2) destiné à être fixé sur une carrosserie de véhicule, le support de bloc de radiateur (2) ayant une partie de cache (2g) formée avec des trous de passages (7, 8) faisant communiquer un côté avant et un côté arrière de celle-ci et une partie inférieure (2b) formée avec des trous de fixation (5, 6) sur une surface supérieure de la partie inférieure (2b) ;
préparer un échangeur de chaleur (1) pourvu de tuyaux (3, 4) faisant saillie vers l'arrière depuis l'échangeur de chaleur (1) pour être introduits par les trous de passages (7, 8) du support de bloc de radiateur (2) quand l'échangeur de chaleur (1) est fixé sur le support de bloc de radiateur (2), l'échangeur de chaleur (1) ayant une partie inférieure (1b) avec des axes de montage inférieurs (P3, P4) faisant saillie vers le bas depuis la partie inférieure (1b) pour être insérés dans les trous de fixation (5, 6) quand l'échangeur de chaleur (1) est fixé sur le support de bloc de radiateur (2) ;
insérer les axes de montage inférieurs (P3, P4) diagonalement depuis un côté avant du support de bloc de radiateur (2) dans un côté avant des trous de fixation (5, 6) ;
tourner l'échangeur de chaleur (1) vers l'arrière autour du côté avant des trous de fixation (5, 6) pour qu'il se tienne dressé, **caractérisé en ce que**
l'insertion des axes de montage inférieurs (P3, P4) dans les trous de fixation (5, 6) est faite de telle manière qu'au moins l'un des axes de montage inférieurs (P3, P4) est inséré plus vers l'avant par rapport à l'autre de telle manière que les tuyaux (3, 4) peuvent être tels qu'il n'y a pas d'interférence entre les tuyaux (3, 4) et le support de bloc de radiateur (2) quand l'échangeur de chaleur (1) est tourné vers l'arrière ; et
l'échangeur de chaleur (1) est déplacé vers l'arrière dans une direction sensiblement horizontale après que l'échangeur de chaleur (1) a été tourné vers l'arrière de telle manière que l'un des axes de montage inférieurs (P3, P4) est coulissé le long d'au moins l'un des trous de fixation (5, 6) et les tuyaux (3, 4) peuvent être introduits par les trous de passages (7, 8).

10. Procédé d'assemblage selon la revendication 9, **caractérisé en ce que**
les axes de montage inférieurs (P3, P4) comprennent un axe de montage inférieur gauche (P3) et un axe de montage inférieur droit (P4) qui sont éloignés l'un de l'autre dans une direction latérale de la carrosserie de véhicule quand l'échangeur de chaleur (1) est fixé sur le support de bloc de radiateur (2), et les trous de fixation (5, 6) comprennent un trou de fixation gauche (5) et un trou de fixation droit (6) pour recevoir l'axe de montage gauche (P3) et l'axe de montage droit (P4), respectivement, et dans lequel
l'échangeur de chaleur (1) a un axe de montage supérieur gauche (P1) et un axe de montage supérieur droit (P2) sur une partie supérieure de l'échangeur de chaleur (1), les axes de montage supérieurs gauche et droit (P1, P2) étant éloignés l'un de l'autre dans une direction latérale de l'échangeur de chaleur (1) et supportés par une partie supérieure du support de bloc de radiateur (2) de telle manière que l'échangeur de chaleur (1) est fixé par un support en trois points composé des axes de montage gauche et droit (P1, P2) et de l'un (P3) des axes de montage gauche et droit (P3, P4) inséré dans le trou anti-coulissement (6').
